# EUROPÄISCHE PATENTSCHRIFT

(11) **EP 4 384 745 B1**
(45) Veröffentlichungstag und Bekanntmachung des Hinweises auf die Patenterteilung: **21.01.2026**
(21) Anmeldenummer: 22764360.8
(22) Anmeldetag: 08.08.2022
(51) Int. Cl.: F16L 59/16, F16L 59/153, F16L 59/18, F16L 59/20, F16L 59/21, F16L 25/14, B33Y 80/00

(54) **ABDECKVORRICHTUNG ZUM ABDECKEN EINER VERBINDUNGSSTELLE VON MEDIENFÜHRENDEN ROHRENDABSCHNITTEN**
COVER DEVICE FOR COVERING A CONNECTION POINT OF MEDIA-CONDUCTING PIPE END SECTIONS
DISPOSITIF DE RECOUVREMENT POUR RECOUVRIR UN POINT DE RACCORDEMENT DE SECTIONS D'EXTRÉMITÉ DE TUYAU TRANSPORTANT DES FLUIDES

(30) Priorität: 10.08.2021 DE 202021104279 U
(43) Veröffentlichungstag der Anmeldung: 19.06.2024
(73) Patentinhaber: REHAU Industries SE & Co. KG, 95111 Rehau (DE)
(72) Erfinder: KIRSCH, Stefan, 91560 Heilsbronn (DE); MEYER, Michael, 85072 Eichstätt (DE)
(86) Internationale Anmeldenummer: PCT/EP2022/072202
(87) Internationale Veröffentlichungsnummer: WO 2023/016971

(56) Entgegenhaltungen:
- EP-A1- 2 990 711
- EP-B1- 0 097 640
- EP-B1- 0 672 857
- WO-A1-2014/032194
- AT-B- 372 171
- AT-B- 378 414
- AT-B- 382 947
- CH-A1- 710 028
- DE-U1- 202016 102 481
- US-A- 2 834 615

## Beschreibung

Die vorliegende Erfindung betrifft eine Abdeckvorrichtung zum Abdecken einer Verbindungsstelle von zwei oder mehr medienführenden Rohrendabschnitten, insbesondere von Endabschnitten thermisch gedämmter Rohre, wobei die Abdeckvorrichtung eine Mehrzahl miteinander verbindbarer Abdeckelemente umfasst, die zur Bildung einer die Verbindungsstelle aufnehmenden Rohrummantelung um die Verbindungsstelle montierbar sind, wobei die Abdeckvorrichtung mindestens einen einem Rohrendabschnitt zugeordneten Rohrabdeckabschnitt umfasst, wobei an dessen Ende ein Außendichtungselement zur Abdichtung der Abdeckvorrichtung gegen den Rohrendabschnitt angeordnet ist, wobei das Außendichtungselement einen Abschlussbereich und einen Durchführungsbereich zur Durchführung des Rohrendabschnitts umfasst.

Bei thermisch gedämmten Rohren, wie beispielsweise bei Nahwärme- oder Fernwärmerohren, handelt es sich um Rohre, die ein mediumführendes Innenrohr umfassen, durch das eine erwärmte Flüssigkeit strömt, um Wärmeenergie von einem Erzeuger zu einem Verbraucher zu transportieren. Derartige Rohre umfassen darüber hinaus eine um das Innenrohr angeordnete thermische Isolierung bzw. Wärmedämmung sowie eine auf die Außenoberfläche der thermischen Isolierung aufgebrachte Außenschicht. Zur Anordnung eines Bogens, eines Abzweigs, eines Ventils oder dergleichen oder zur Verbindung zweier Rohre werden an der entsprechenden Stelle die Außenschicht und die thermische Isolierung entfernt und das Innenrohr freigelegt. An der gewünschten Stelle wird ein Fitting eingebaut und das Medienrohr auf diese Weise fluiddicht verbunden. Zur Wiederherstellung einer entsprechenden Wärmedämmung wird eine Rohrummantelung um die so gebildete Verbindungsstelle montiert. Diese Rohrummantelung kann beispielsweise zweiteilig aus Schalen ausgebildet sein. Die beiden Schalen werden um die Verbindungsstelle herum und zueinander entsprechend positioniert und miteinander verbunden, beispielsweise kraftschlüssig, insbesondere mittels Rast- oder Schnappverbindungen. Im Inneren dieser Rohrummantelung wird ein Hohlraum gebildet, in dem die Verbindungsstelle angeordnet ist. Der Hohlraum kann anschließend mit einem Wärmedämmschaum, beispielsweise mit Polymerschaum, insbesondere einem Polyurethanschaum, ausgefüllt werden, wodurch die Wärmedämmung in diesem Abschnitt wiederhergestellt wird. Alternativ kann der Hohlraum auch mit thermischen Isolierungselementen, beispielsweise Kügelchen aus einem Polymerschaum, insbesondere einem Polystyrol, aufgefüllt werden. Zur Abdichtung nach außen dient ein Außendichtungselement. Eine derartige Abdeckvorrichtung ist beispielsweise aus der DE 10 2014 106 802 A1 bekannt. Eine weitere Abdeckvorrichtung geht aus der CH 710 028 A1 hervor.

Nachteilig an der in der DE 10 2014 106 802 A1 beschriebenen Abdeckvorrichtung und anderen im Markt erhältlichen Abdeckvorrichtungen wird gesehen, dass zur Anpassung der jeweiligen Abdeckvorrichtungen an unterschiedliche Rohraußendurchmesser eine andere Variante des Außendichtungselements erforderlich ist. Dadurch müssen an der Baustelle eine Vielzahl von Varianten des entsprechenden Außendichtungselements vorgehalten werden. Auf der Baustelle muss die entsprechende Variante erst an die Einsatzstelle gebracht werden, was die Montage der Abdeckvorrichtung in die Länge zieht.

An dieser Stelle setzt die vorliegende Erfindung ein, der die Aufgabe zugrunde liegt, eine derartige Abdeckungsvorrichtung zur Verfügung zu stellen, die die Nachteile des Stands der Technik zumindest teilweise überwindet. Insbesondere soll die erfindungsgemäße Abdeckvorrichtung für verschiedene Rohraußendurchmesser ohne große Lagerhaltung einsetzbar sein. Darüber hinaus soll die soll die erfindungsgemäße Abdeckvorrichtung leicht und schnell zu montieren sein können.

Diese und andere Aufgaben werden durch eine Abdeckvorrichtung mit den Merkmalen des Anspruchs 1 gelöst. Bevorzugte Ausführungsformen der erfindungsgemäßen Abdeckvorrichtung sind in den abhängigen Ansprüchen beschrieben.

Gemäß der vorliegenden Erfindung wurde erkannt, dass sich die Bevorratung der Einzelteile für eine Abdeckvorrichtung dadurch erheblich verringern lässt, dass in der Abdeckvorrichtung ein universell einsetzbares Außendichtungselement zum Einsatz kommt. Erfindungsgemäß wird dies dadurch realisiert, dass das Außendichtungselement aus einem elastischen Material ausgebildet ist. Bereits der Einsatz des elastischen Materials macht das Außendichtungselement in einem gewissen Umfang für unterschiedliche Außendurchmesser der Rohrendabschnitte zugänglich. Darüber hinaus ist der Durchführungsbereich des Außendichtungselements erfindungsgemäß ablängbar, insbesondere abschneidbar, und kann so über einen weiten Bereich an unterschiedliche Außendurchmesser der durch den Durchführungsbereich durchzuführenden Rohrendabschnitte angepasst werden. Da dieses Ablängen sehr schnell und einfach erfolgen kann, bringt dies neben der geringeren Anzahl an zu bevorraten den Artikel für die erfindungsgemäße Abdeckvorrichtung auch eine verkürzte Montagezeit mit sich.

Dementsprechend stellt die vorliegende Erfindung eine Abdeckvorrichtung zum Abdecken einer Verbindungsstelle von zwei oder mehr medienführenden Rohrendabschnitten, insbesondere von Endabschnitten thermisch gedämmter Rohre, wobei die Abdeckvorrichtung eine Mehrzahl miteinander verbindbarer Abdeckelemente umfasst, die zur Bildung einer die Verbindungsstelle aufnehmenden Rohrummantelung um die Verbindungsstelle montierbar sind, wobei die Abdeckvorrichtung mindestens einen einem Rohrendabschnitt zugeordneten Rohrabdeckabschnitt umfasst, wobei an dessen Ende ein Außendichtungselement zur Abdichtung der Abdeckvorrichtung gegen den Rohrendabschnitt angeordnet ist, wobei das Außendichtungselement einen Abschlussbereich und einen Durchführungsbereich zur Durchführung des Rohrendabschnitts umfasst, wobei das Außendichtungselement aus einem elastischen Material ausgebildet und der Durchführungsbereich des Außendichtungselements an den Außendurchmesser des durch das Außendichtungselement zu führenden Rohrendabschnitts anpassbar ist.

In Bezug auf die erfindungsgemäße Abdeckvorrichtung kann es bevorzugt sein, wenn der Durchführungsbereich des Außendichtungselements durch Ablängen des Abschlussbereichs an den Außendurchmesser des durch das Außendichtungselement zu führenden Rohrendabschnitts anpassbar ist. Ein derartiges Ablängen des Abschlussbereichs kann insbesondere durch Abschneiden erfolgen.

Erfindungsgemäß ist der Abschlussbereich des Außendichtungselements zumindest abschnittsweise als Faltenbalg ausgebildet.

Dadurch kann sich auch der Abschlussbereich des Außendichtungselements an den Außendurchmesser des durch das Außendichtungselement durchzuführenden Rohrendabschnitts zumindest teilweise anpassen. Auf diese Weise wird die Variierbarkeit des Außendurchmessers des durch das Außendichtungselement durchzuführenden Rohrendabschnitts noch einmal erheblich vergrößert.

Es kann auch hilfreich sein, wenn das Außendichtungselement über ein Verbindungselement, das bevorzugt als separates Bauteil ausgebildet ist, mit dem zugeordneten Rohrabdeckabschnitt verbunden ist. Dies trägt zur Vereinfachung der Montage der erfindungsgemäßen Abdeckvorrichtung bei. Dazu weist das Außendichtungselement an seiner dem zugeordneten Rohrabdeckabschnitt zugewandten Abschnitt vorzugsweise ein umlaufendes Eingriffselement auf, das in ein entsprechendes, am Rohrabdeckabschnitt angeordnetes, mit dem Eingriffselement kooperierendes Rohrabdeckabschnitts-Eingriffselement in Eingriff bringbar, insbesondere einsteckbar, einclipsbar oder verrastbar, ist oder umgekehrt.

Mit großem Vorteil kann im Rahmen der vorliegenden Erfindung der Werkstoff des Außendichtungselements elastomeren Werkstoffen, beispielsweise Ethylen-Propylen-Dien-Kautschuk (EPDM), Ethylen-Propylen-Copolymer-Kautschuk (EPM), Fluor-Polymer-Kautschuk (FKM, FPM), Perfluorierter Kautschuk (FFKM, FFPM), Fluor-Silikon-Kautschuk (FVMQ), Isopren-Kautschuk (IR), Butyl-Kautschuk (IIR), Butadien-Kautschuk (BR), Nitril-Kautschuk (NBR), Chloropren-Kautschuk (CR), Gummi (NR), Silikon-Kautschuk, thermoplastischen Elastomeren, Polyurethan (PU), thermoplastischen Polyurethanen (TPU), sowie Mischungen, Copöoymeren und Blends der genannten Werkstoffe ausgewählt sein. Durch die Verwendung dieser Werkstoffe für das Außendichtungselement kann dieses nach den technischen Vorgaben hinsichtlich Flexibilität, Härte, Inertheit und weiteren mechanischen, chemischen und physikalischen Faktoren bereitgestellt werden. Im Rahmen der vorliegenden Erfindung kann es sich auch als günstig erweisen, wenn vorgesehen ist, dass das Außendichtungselement abschnittsweise aus verschiedenen Werkstoffen besteht oder solche enthält. So kann es beispielsweise vorteilhaft sein, wenn die Abschnitte des Außendichtungselements, die abdichtend wirken sollen, aus einem Werkstoff mit einem geringeren E-Modul gewählt werden, als die Abschnitte des Außendichtungselements, die nicht zur Dichtwirkung beitragen sollen, sondern quasi die stabilisierende und tragende Funktion erfüllen. Auf diese Weise kann im Bereich der dichtend wirkenden Abschnitte eine besonders hohe Fluiddichtheit erzielt werden. Auch können durch diese Maßnahme die Materialkosten für ein solches Außendichtungselement gesenkt werden.

Erfindungsgemäß ist mindestens ein Rohrabdeckabschnitt der erfindungsgemäßen Abdeckvorrichtung mit einem derartigen Außendichtungselement versehen. Es kann jedoch auch mehr als ein Rohrabdeckabschnitt der erfindungsgemäßen Abdeckvorrichtung ein derartiges Außendichtungselement aufweisen. In besonders bevorzugten Ausführungsformen der vorliegenden Erfindung weisen alle Rohrabdeckabschnitte der erfindungsgemäßen Abdeckvorrichtung ein derartiges ablängbares Außendichtungselement auf.

Erfindungsgemäß ist mindestens einer der Rohrabdeckabschnitte in axialer Richtung in Abschnitte unterteilt ausgebildet und umfasst zumindest einen verbindungsstellenseitigen Abschnitt und einen verbindungsstellenabgewandten Abschnitt, wobei der verbindungsstellenseitige Abschnitt und der verbindungsstellenabgewandte Abschnitt über ein Gelenkelement miteinander verbunden sind. Dadurch können mechanische Spannungen der Rohrendabschnitte, die durch die Starrheit der im Stand der Technik bekannten Abdeckvorrichtungen und insbesondere deren Rohrabdeckabschnitte bedingt sind, kompensiert werden. Eine Reduktion dieser Starrheit der Rohrendabschnitte reduziert auch die mechanischen Spannungen der Rohrendabschnitte im Inneren der Rohrabdeckvorrichtung. Über das Gelenkelement ist die Winkellage des verbindungsstellenseitigen Abschnitts in Bezug auf den verbindungsstellenabgewandten Abschnitt des Rohrabdeckabschnitts variabel. Dadurch können Winkelabweichungen der Rohrendabschnitte durch verschiedene Einstellungen der Winkellage des verbindungsstellenseitigen Abschnitts zum verbindungsstellenabgewandten Abschnitt des Rohrabdeckabschnitts kompensiert und mechanische Spannungen in den Rohrendabschnitten abgebaut werden. Dadurch können Rohrverbindungen im Inneren der Abdeckvorrichtung leichter erzeugt werden. Darüber hinaus lässt sich die Abdeckvorrichtung aufgrund der reduzierten Spannung der Rohrendabschnitte leichter verschließen und besser ausschäumen

Dabei ist es bevorzugt, wenn mehr als ein Rohrendabschnitt, insbesondere alle Rohrendabschnitte einer erfindungsgemäßen Rohrabdeckvorrichtung jeweils in Richtung ihrer Längsachse in Abschnitte unterteilt ausgebildet sind und zumindest jeweils einen verbindungsstellenseitigen Abschnitt und einen verbindungsstellenabgewandten Abschnitt umfassen, wobei der verbindungsstellenseitige Abschnitt und der verbindungsstellenabgewandte Abschnitt jeweils über ein entsprechendes Gelenkelement miteinander verbunden sind. Die Gelenkelemente können dabei für die einzelnen Rohrabdeckabschnitte identisch oder verschieden sein. Die Rohrendabschnitte können dabei unabhängig voneinander zusätzlich zu dem verbindungsstellenseitigen Abschnitt und dem verbindungsstellenabgewandten Abschnitt weitere Abschnitte umfassen.

Erfindungsgemäß ist ein Bestandteil des Gelenkelements dem verbindungsstellenseitigen Abschnitt des Rohrabdeckabschnitts zugeordnet ist und ein weiterer Bestandteil des Gelenkelements dem verbindungsstellenabgewandten Abschnitt des Rohrabdeckabschnitts zugeordnet ist. Dies ermöglicht einen besonders einfachen Aufbau und eine erleichterte Herstellung der erfindungsgemäßen Rohrabdeckvorrichtung. Insbesondere ist es bevorzugt, wenn die einzelnen Bestandteile des Gelenkelements mit dem jeweiligen Abschnitt verbunden. In diesem Zusammenhang ist es besonders bevorzugt, wenn der dem verbindungsstellenseitigen Abschnitt zugeordnete Bestandteil des Gelenkelements einstückig mit dem verbindungsstellenseitigen Abschnitt ausgebildet ist und/oder der dem verbindungsstellenabgewandten Abschnitt zugeordnete Bestandteil des Gelenkelements einstückig mit dem verbindungsstellenabgewandten Abschnitt ausgebildet ist.

Erfindungsgemäß sind der dem verbindungsstellenseitigen Abschnitt zugeordneten Bestandteil des Gelenkelements und der dem verbindungsstellenabgewandten Abschnitt zugeordneten Bestandteil des Gelenkelements als gegeneinander verdrehbare Kugelschalenabschnitte ausgebildet. Eine derartige Ausgestaltung des Gelenkelements in einer Art Kugelelement ermöglicht einen besonders hohen Grad an Anpassungsfähigkeit der erfindungsgemäßen Abdeckvorrichtung.

In bevorzugten Ausführungsformen der erfindungsgemäßen Abdeckvorrichtung ist zwischen dem dem verbindungsstellenseitigen Abschnitt zugeordnete Bestandteil des Gelenkelements und dem dem verbindungsstellenabgewandten Abschnitt mindestens ein Dichtelement angeordnet ist. Bei diesem Dichtelement handelt es sich vorzugsweise um einen oder mehrere Dichtungsringe. Ein derartiges Dichtelement dient zur Abdichtung des Innenraums der erfindungsgemäßen Abdichtung nach außen.

Es kann auch günstig sein, wenn der verbindungsstellenabgewandte Abschnitt zumindest teilweise in den verbindungsstellenseitigen Abschnitt aufnehmbar ist. So kann das Lager- und Transportvolumen der erfindungsgemäßen Abdeckvorrichtung signifikant verringert werden. Am Einsatzort kann verbindungsstellenabgewandte Abschnitt wieder aus dem verbindungsstellenseitigen Abschnitt entnommen und sich von diesem weg weisend verbunden werden, wodurch die erfindungsgemäße Abdeckvorrichtung ihre eigentliche Raumform im Verwendungszustand erhält.

In bevorzugten Ausführungsformen besitzt die erfindungsgemäße Abdeckvorrichtung eine im Wesentlichen T-förmige Gesamtgeometrie oder eine im Wesentlichen Y-förmige Gesamtgeometrie. Während eine T-förmige Gesamtgeometrie einen im wesentlichen rechtwinkligen Rohrabzweig ermöglicht, kann durch eine im Wesentlichen Y-förmige Gesamtgeometrie in engen Einbausituationen Raum eingespart werden.

Die Montage der erfindungsgemäßen Abdeckvorrichtung erfolgt folgendermaßen: Das vorisolierte Rohr wird zunächst an dem Ende, das in die erfindungsgemäße Abdeckvorrichtung einzuführen ist, zunächst ein Stück weit von der Wärmedämmschicht und der Außenschicht befreit, indem diese beispielsweise abgeschnitten, abgeschlagen, abgebrochen oder abgefräst werden. Das Ende des freigelegten Medienrohres wird dann in den Durchführungsbereich des Außendichtungselements eingeführt, der Durchführungsbereich des Außendichtungselements durch entsprechendes Abschneiden des Abschlussbereichs an den Außendurchmesser des durch das Außendichtungselement zu führenden Rohrendabschnitts mit vorhandener Wärmedämmschicht und Außenschicht angepasst und der Rohrendabschnitt durch den Durchführungsbereich geschoben, bis das Ende im Bereich der herzustellenden Rohrverbindung liegt. In entsprechender Weise erfolgt dies für jeden Rohrendabschnitt, der in die erfindungsgemäße Abdeckvorrichtung eingebracht werden soll. Anschließend wird unter Einsatz eines entsprechenden Verbindungselements eine fluidleitende und fluiddichte Rohrverbindung zwischen den Rohrwendabschnitten hergestellt. Danach wird das erfindungsgemäße Abdeckelement verschlossen, wodurch eine die Verbindungsstelle aufnehmende Rohrummantelung gebildet wird, und der Innenraum der erfindungsgemäßen Abdeckvorrichtung wird beispielsweise mit einem expandierenden Polymerschaum gefüllt, wodurch die Wärmedämmung in den Bereichen der Rohrverbindung und der Rohrendabschnitte mit entfernter Wärmedämmschicht und Außenschicht wiederhergestellt wird.

Die erfindungsgemäße Abdeckvorrichtung sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Weitere wichtige Merkmale und Vorteile der vorliegenden Erfindung ergeben sich aus den Unteransprüchen, aus den Figuren und aus der zugehörigen Figurenbeschreibung.

Im Folgenden soll die vorliegende Erfindung unter Bezugnahme auf die in den Figuren dargestellte Ausführungsform im Detail erläutert werden. Es versteht sich jedoch, dass die vorliegende Erfindung nicht auf die in den Figuren dargestellte Ausführungsform beschränkt ist. Dabei zeigen
- Figur 1: eine schematische Querschnittsansicht einer Rohrverbindung mit drei Rohrendabschnitten, die in einer Abdeckvorrichtung gemäß einer Ausführungsform der vorliegenden Erfindung aufgenommen ist;
- Fig. 2: eine vergrößerte Querschnittsansicht eines Gelenkelements der in Fig. 1 dargestellten erfindungsgemäßen Abdeckvorrichtung;
- Fig. 3: eine vergrößerte Querschnittsansicht eines verbindungsstellenabgewandten Abschnitts eines Rohrabdeckelements gemäß einer weiteren Ausführungsform der vorliegenden Erfindung bei nicht gerade einlaufendem Rohrendabschnitt;
- Fig. 4a: eine schematische Querschnittsansicht einer Abdeckvorrichtung gemäß einer weiteren Ausführungsform der vorliegenden Erfindung im Transport- und Lagerzustand;und
- Fig. 4b: eine schematische Querschnittsansicht der in Fig. 4a dargestellten erfindungsgemäßen Abdeckvorrichtung im Verwendungszustand.

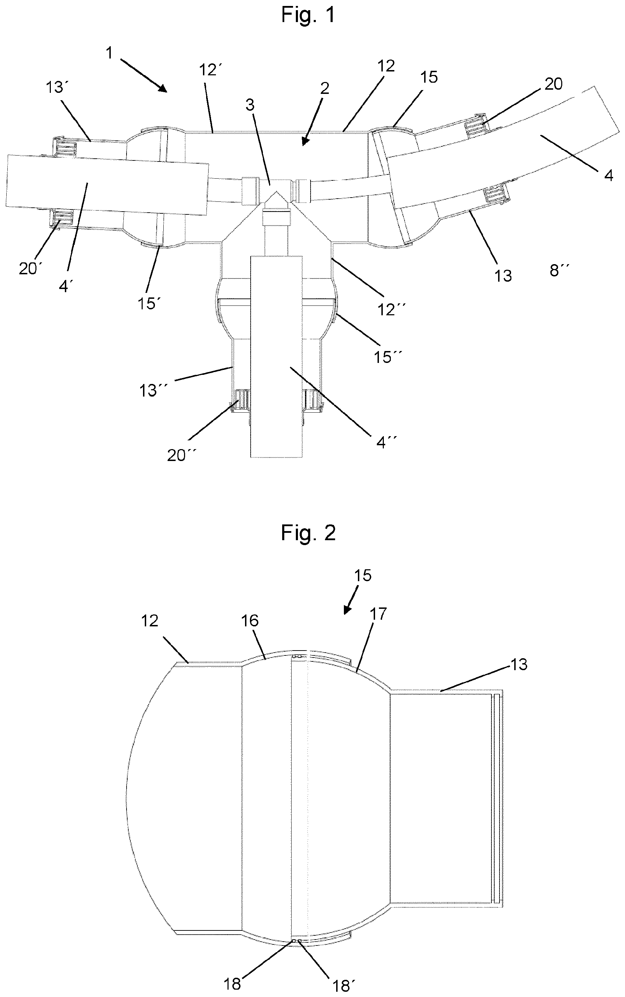

Fig. 1 zeigt den schematischen Aufbau eine Abdeckvorrichtung 1 gemäß einer Ausführungsform der vorliegenden Erfindung und den schematischen Aufbau einer Rohrverbindung mit einem Verbindungselement 3, das in der dargestellten Ausführungsform als T-Stück zur Verbindung von drei Rohrendabschnitten 4, 4, 4" ausgebildet ist, wobei die Rohrbindung an einer Verbindungsstelle 2 in der erfindungsgemäßen Abdeckvorrichtung angeordnet ist.

In der in Fig. 1 dargestellten Ausführungsform umfasst die erfindungsgemäße Abdeckvorrichtung 1 drei Rohrabdeckabschnitte 11, 11', 11", die jeweils einem der Rohrendabschnitte 4, 4', 4" zugeordnet sind. Insgesamt weist die in Fig.1 dargestellte Ausführungsform der erfindungsgemäßen Abdeckungsvorrichtung 1 eine T-förmige Gesamtgeometrie auf. Diese T-förmige Gesamtgeometrie entspricht der Geometrie des als T-Stück ausgebildeten Verbindungselements 3, mit dem die drei Rohrendabschnitte 4, 4', 4'' verbunden sind. Diese T-förmige Gesamtgeometrie ermöglicht einen Abzweig aus einer im wesentlichen durchlaufenden Rohrleitung, was durch die Rohrendabschnitte 4 und 4' ausgebildet ist. Der Abzweig hingegen erfolgt im Wesentlichen rechtwinklig durch den der Rohrendabschnitte 4".

In alternativen Ausführungsformen kann die erfindungsgemäße Abdeckvorrichtung 1 auch eine davon abweichende Gesamtgeometrie, insbesondere eine Y-förmige Gesamtgeometrie, besitzen. In einer derartigen Y-förmige Gesamtgeometrie werden durch die drei Rohrendabschnitte 4, 4', 4" paarweise ungefähr gleiche Winkel von etwa 120° eingeschlossen.

In der in Fig. 1 dargestellten Ausführungsform umfasst die erfindungsgemäße Abdeckvorrichtung 1 drei Rohrabdeckabschnitte 11, 11', 11", die jeweils einem der Rohrendabschnitte 4, 4, 4" zugeordnet sind. Insgesamt weist die in Fig.1 dargestellte Ausführungsform der erfindungsgemäßen Abdeckungsvorrichtung 1 eine T-förmige Gesamtgeometrie auf. Diese T-förmige Gesamtgeometrie entspricht der Geometrie des als T-Stück ausgebildeten Verbindungselements 3, mit dem die drei Rohrendabschnitte 4, 4, 4" verbunden sind.

Jeder der drei Rohrabdeckabschnitte 11, 11', 11" ist dabei jeweils in Richtung seiner Längsachse in zwei Abschnitte 12, 12', 12", 13, 13', 13" unterteilt, nämlich jeweils einen verbindungsstellenseitigen Abschnitt 12, 12', 12" und einen verbindungsstellenabgewandten Abschnitt 13, 13', 13". Dabei sind die verbindungsstellenseitigen Abschnitte 12, 12', 12'' einstückig miteinander verbunden, wodurch wiederum eine T-förmige Geometrie ausgebildet ist. Das so entstandene Element ist in Form zweier miteinander verbindbarer Halbschalen ausgebildet. Dabei ist in Fig. 1 der offene Zustand, also eine Halbschale, gezeigt.

Im Gegensatz dazu sind die verbindungsstellenabgewandten Abschnitte 13, 13', 13" in der in Fig. 1 dargestellten Ausführungsform umlaufend und damit einteilig ausgebildet.

In jedem der Rohrabdeckabschnitte 11, 11', 11" ist der verbindungsstellenseitige Abschnitt 12, 12', 12" gemäß der Ausführungsform gemäß Fig. 1 über ein Gelenkelement 15, 15', 15" mit dem zugehörigen verbindungsstellenabgewandten Abschnitt 13, 13', 13" verbunden. In bevorzugten Ausführungsformen der vorliegenden Erfindung weist mindestens einer der Rohrabdeckabschnitte 11, 11', 11" ein derartiges Gelenkelement 15, 15', 15" auf. Es ist jedoch bevorzugt, dass alle Rohrabdeckabschnitte 11, 11', 11" mit einem Gelenkelement 15, 15', 15" versehen sind.

Der Aufbau der einzelnen Gelenkelemente 15, 15', 15" ist in Fig. 2 einer vergrößerten Querschnittsansicht des Gelenkelements 15 dargestellt. Das Gelenkelement 15 ist zweiteilig ausgebildet. Dabei umfasst es einen dem verbindungsstellenseitigen Abschnitt 12 zugeordneten Bestandteil 16 und einen dem verbindungsstellenabgewandten Abschnitt 13 zugeordneten weiteren Bestandteil 17. In der in Fig, 2 dargestellten Ausführungsform der erfindungsgemäßen Abdeckvorrichtung 1 ist der dem verbindungsstellenseitigen Abschnitt 12 zugeordnete Bestandteil 16 des Gelenkelements 15 einstückig mit dem verbindungsstellenseitigen Abschnitt 12 ausgebildet. Unabhängig davon ist gemäß der in Fig, 2 dargestellten Ausführungsform der vorliegenden Erfindung der dem verbindungsstellenabgewandten Abschnitt 13 zugeordnete weitere Bestandteil 17 des Gelenkelements 15 einstückig mit dem verbindungsstellenabgewandten Abschnitt 13 ausgebildet. Die Bestandteile 16, 17 des Gelenkelements 15 sind als gegeneinander verdrehbare Kugelschalenabschnitte ausgebildet. Dabei ist der dem verbindungsstellenabgewandten Abschnitt 13 zugeordnete weitere Bestandteil 17 teilweise in den dem verbindungsstellenseitigen Abschnitt 12 zugeordneten Bestandteil 16 drehbar aufgenommen. Auf diese Weise stellt das Gelenkelement 15 ein Kugelgelenk dar, sodass ein hoher Grad an Vertretbarkeit des verbindungsstellenseitigen Abschnitts 12 gegenüber dem verbindungsstellenabgewandten Abschnitt 13 gewährleistet ist. Letztlich sind zwischen den beiden Bestandteilen 16, 17 des Gelenkelements 15 zwei Dichtelemente 18, 18' angeordnet, die in der in Fig. 2 dargestellten Ausführungsform der vorliegenden Erfindung jeweils als O-Ringe ausgebildet sind. Die beiden anderen Gelenkelemente 15', 15" der in Fig. 1 dargestellten erfindungsgemäßen Abdeckvorrichtung 1 entsprechen dem Gelenkelement 15.

Wie in Fig. 1 zu erkennen ist, läuft der Rohrendabschnitt 4 gekrümmt in die erfindungsgemäße Abdeckvorrichtung 1 ein. Bei starrer Ausgestaltung des dem Rohrendabschnitt 4 zugeteilten Rohrabdeckabschnitts 11 würde dies zu mechanischen Spannungen führen. Aufgrund des Gelenkelements 15 besitzen die Rohrendabschnitte 11, 11', 11'' der erfindungsgemäßen Abdeckvorrichtung 1 die Möglichkeit, dieses Schrägeinlaufen des Rohrendabschnitts 4 zu kompensieren, indem der verbindungsstellenseitige Abschnitt 12 gegenüber dem verbindungsstellenabgewandten Abschnitt 13 durch das Gelenkelement 15 verdreht ist. Damit verläuft der Rohrendabschnitt 4 spannungsfrei in der erfindungsgemäßen Abdeckvorrichtung 1. Somit lässt sich die erfindungsgemäße Abdeckvorrichtung 1 leicht verschließen und gut ausschäumen. Darüber hinaus lassen sich die spannungsfreien Rohrendabschnitte 4, 4', 4" gut mittels des Verbindungselements 3 miteinander verbinden. Die beiden anderen Rohrabdeckabschnitte 4', 4'' treten in der dargestellten Ausführungsform gerade in die erfindungsgemäße Abdeckvorrichtung 1 ein, sodass das Problem der mechanischen Spannungen dort nicht auftritt.

Die in der erfindungsgemäßen Abdeckvorrichtung 1 aufgenommene Rohrverbindung aus Verbindungselement 3 und Rohrendabschnitten 4, 4', 4" ist in Fig. 1 nicht im Querschnitt dargestellt.

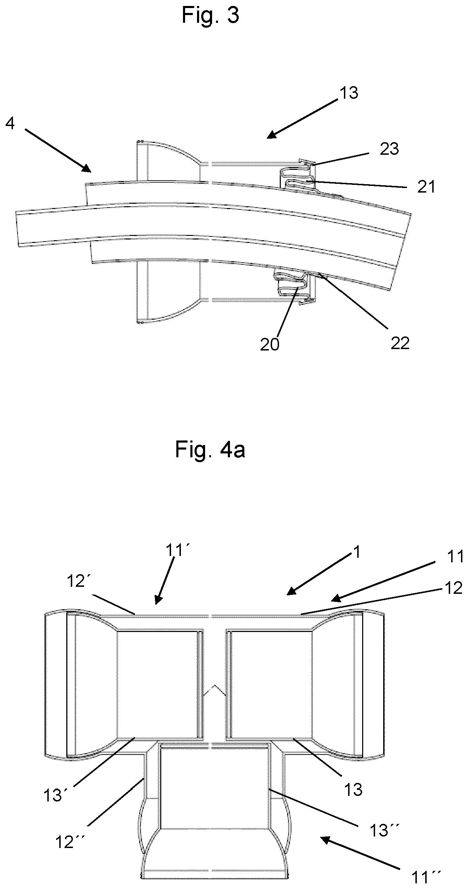

Der von der Verbindungsstelle 2 wegweisende Abschluss des verbindungsstellenabgewandten Abschnitts 13, 13'. 13" wird für jeden Rohrabdeckabschnitt 11, 11', 11" jeweils durch ein Außendichtungselement 20, 20', 20'' gebildet. Der Aufbau und die Funktionsweise dieses Außendichtungselement 20, 20', 20" wird in Bezug auf Fig. 3 erläutert, die eine vergrößerte Querschnittsansicht des verbindungsstellenabgewandten Abschnitts 13 mit dem Außendichtungselement 20 zeigt.

Das Außendichtungselement 20 dient zur Abdichtung der erfindungsgemäßen Abdeckvorrichtung 1 gegen den durch das Außendichtungselement 20 geführten Rohrendabschnitt 4 nach außen.

Das Außendichtungselement 20 ist aus einem elastischen Material ausgebildet. Es umfasst einen Abschlussbereich 21 und einen Durchführungsbereich 22. Der Abschlussbereich 21 grenzt den Rohrabdeckabschnitt 11 nach außen hin ab. Der Durchführungsbereich 22 dient dagegen zur Durchführung des Rohrendabschnitts 4 durch das Außendichtungselement 20. zur Anpassung an den Außendurchmesser des Rohrendabschnitts 4 kann Abschlussbereich 21 leicht abgelängt, insbesondere abgeschnitten, werden. Dadurch ist die erfindungsgemäße Abdeckvorrichtung 1 für medienführende Rohre mit unterschiedlichem Außendurchmesser geeignet, ohne dass für jeden möglichen Rohrdurchmesser eine unterschiedliche Ausführungsform für das Außendichtungselement 20 vorgehalten werden muss. Im Vergleich zum Stand der Technik ist die erfindungsgemäße Abdeckvorrichtung 1 daher universell einsetzbar. Der Abschlussbereich 21 des Außendichtungselement 20 ist in Fig. 3 als Faltenbalg ausgebildet, was die Anpassungsfähigkeit des Außendichtungselements 20 an den Außendurchmesser des Rohrendabschnitts 4 und an die Einführungsrichtung des Rohrendabschnitts 11 weiter erhöht.

Gemäß der in Fig. 3 dargestellten Ausführungsform der erfindungsgemäßen Abdeckvorrichtung 1 ist das Außendichtungselement 20 über ein Verbindungselement 23 mit dem zugeordneten Rohrabdeckabschnitt 11 verbunden.

Gemäß dieser Ausführungsform ist das Verbindungselement 23 als Einclipsring ausgebildet. Dieser weist an seiner dem zugeordneten Rohrabdeckabschnitt 11 zugewandten Seite ein umlaufendes Eingriffselement auf, das in ein entsprechendes, am Rohrabdeckabschnitt 11 angeordnetes, mit dem Eingriffselement kooperierendes Rohrabdeckabschnitts-Eingriffselement in Eingriff gebracht werden kann, was vorzugsweise durch Einstecken, Einclipsen oder Verrasten erfolgen kann.

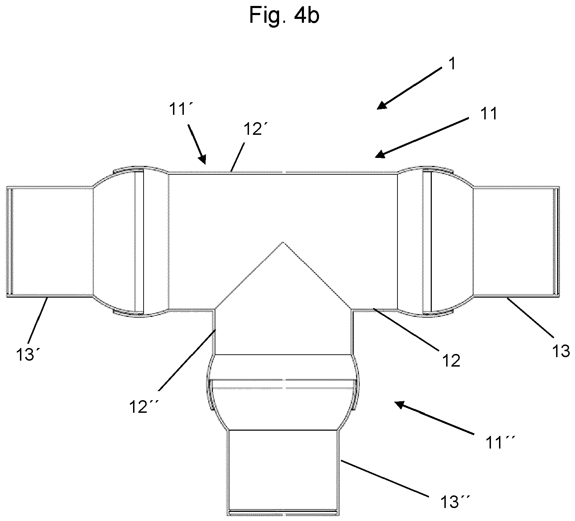

Eine weitere vorteilhafte Ausgestaltung der erfindungsgemäßen Abdeckvorrichtung 1 ist in Fig. 4a und Fig. 4b dargestellt. Dabei zeigt Fig. 4a den Lager- und Transportzustand der erfindungsgemäßen Abdeckvorrichtung 1. Zu diesem Zweck ist der zentrale Teil der Abdeckvorrichtung 1, der in der dargestellten Ausführungsform jeweils die miteinander einstückig verbundenen verbindungsstellenseitigen Abschnitte 12, 12', 12" von drei Rohrabdeckabschnitten 11, 11', 11'' umfasst und aus zwei miteinander verbindbaren Halbschalen aufgebaut ist, geöffnet gezeigt. In die verbindungsstellenseitigen Abschnitte 12, 12', 12" sind die verbindungsstellenabgewandten Abschnitte 13, 13', 13" derart aufgenommen, dass die das Außendichtungselement 20 umfassenden Enden der verbindungsstellenabgewandten Abschnitte 13, 13', 13" zur späteren Verbindungsstelle 2 weisen, also in das Innere der erfindungsgemäßen Abdeckvorrichtung 1. In diesem Lager- und Transportzustand ist das von der erfindungsgemäßen Abdeckvorrichtung 1 eingenommene Volumen stark reduziert. In diesem Zustand kann die erfindungsgemäße Abdeckvorrichtung 1 daher gelagert und zur beabsichtigten Verwendungstelle transportiert werden, wobei diese nur ein reduziertes Volumen einnimmt. Am Einsatzort wird eine Halbschale des zentralen Bereichs abgenommen und die drei verbindungsstellenabgewandten Abschnitte 13, 13', 13'' werden derart um 180° gedreht, dass die das Außendichtungselement 20 umfassenden Enden der verbindungsstellenabgewandten Abschnitte 13, 13', 13" nach außen weisen. Dieser Zustand ist in Fig. 4b dargestellt. Darin besitzt die erfindungsgemäße Abdeckvorrichtung 1 ein erheblich höheres Volumen. Die abgenommene Halbschale des zentralen Bereichs kann wieder aufgesetzt und befestigt werden.

Die vorliegende Erfindung wurde exemplarisch unter Bezugnahme auf die in den Figuren dargestellten Ausführungsformen der vorliegenden Erfindung beschrieben. Es versteht sich, dass die vorliegende Erfindung nicht auf die in den Figuren dargestellten Ausführungsformen beschränkt ist, sondern sich der Umfang der vorliegenden Erfindung aus den beigefügten Ansprüchen ergibt.

## Patentansprüche

1. Abdeckvorrichtung (1) zum Abdecken einer Verbindungsstelle (2) von zwei oder mehr medienführenden Rohrendabschnitten (4, 4', 4"), wobei die Abdeckvorrichtung (1) eine Mehrzahl miteinander verbindbarer Abdeckelemente umfasst, die zur Bildung einer die Verbindungsstelle (2) aufnehmenden Rohrummantelung um die Verbindungsstelle (2) montierbar sind, wobei die Abdeckvorrichtung (1) mindestens einen einem Rohrendabschnitt (4, 4', 4") zugeordneten Rohrabdeckabschnitt (11, 11', 11") umfasst, an dessen Ende ein Außendichtungselement (20, 20', 20") zur Abdichtung der Abdeckvorrichtung (1) gegen den Rohrendabschnitt (4, 4', 4") angeordnet ist, wobei das Außendichtungselement (20, 20', 20") einen Abschlussbereich (21) und einen Durchführungsbereich (22) zur Durchführung des Rohrendabschnitts (4, 4', 4") umfasst, wobei das Außendichtungselement (20, 20', 20") aus einem elastischen Material ausgebildet und der Durchführungsbereich (22) des Außendichtungselements (20, 20', 20") an den Außendurchmesser des durch das Außendichtungselement (20, 20', 20") zu führenden Rohrendabschnitts (4, 4', 4") anpassbar ist, wobei mindestens einer der Rohrabdeckabschnitte (11, 11', 11") in axialer Richtung in Abschnitte (12, 12', 12", 13, 13', 13") unterteilt ausgebildet ist und zumindest einen verbindungsstellenseitigen Abschnitt (12, 12', 12") und einen verbindungsstellenabgewandten Abschnitt (13, 13', 13") umfasst, wobei der verbindungsstellenseitige Abschnitt (12, 12', 12") und der verbindungsstellenabgewandte Abschnitt (13, 13', 13'') über ein Gelenkelement (15) miteinander verbunden sind, wobei das Gelenkelement (15) zweiteilig ausgebildet ist, wobei ein Bestandteil (16) des Gelenkelements (15) dem verbindungsstellenseitigen Abschnitt (12, 12', 12") des Rohrabdeckabschnitts (11, 11', 11'') zugeordnet ist und ein weiterer Bestandteil (17) des Gelenkelements (15) dem verbindungsstellenabgewandten Abschnitt (13, 13', 13'') des Rohrabdeckabschnitts (11, 11', 11") zugeordnet ist,
**dadurch gekennzeichnet, dass**
der dem verbindungsstellenseitigen Abschnitt (12, 12', 12") zugeordneten Bestandteil (16) des Gelenkelements (15) und der dem verbindungsstellenabgewandten Abschnitt (13, 13', 13'') zugeordneten Bestandteil (17) des Gelenkelements (15) als
gegeneinander verdrehbare Kugelschalenabschnitte ausgebildet sind und der Abschlussbereich (21) des Außendichtungselements (20, 20', 20") zumindest abschnittsweise als Faltenbalg ausgebildet ist.

2. Abdeckvorrichtung (1) gemäß Anspruch 1, **dadurch gekennzeichnet, dass** der Durchführungsbereich (22) des Außendichtungselements (20, 20', 20") durch Ablängen des Abschlussbereichs (21) an den Außendurchmesser des durch das Außendichtungselement (20, 20', 20") zu führenden Rohrendabschnitts (4, 4', 4") anpassbar ist.

3. Abdeckvorrichtung (1) gemäß Anspruch 1 oder Anspruch 2, **dadurch gekennzeichnet, dass** das Außendichtungselement (20, 20', 20") über ein Verbindungselement (23), das bevorzugt als separates Bauteil ausgebildet ist, mit dem zugeordneten Rohrabdeckabschnitt (11, 11', 11") verbunden ist.

4. Abdeckvorrichtung (1) gemäß Anspruch 1, **dadurch gekennzeichnet, dass** der dem verbindungsstellenseitigen Abschnitt (12, 12', 12") zugeordnete Bestandteil (16) des Gelenkelements (15) einstückig mit dem verbindungsstellenseitigen Abschnitt (12, 12', 12") ausgebildet ist und/oder der dem verbindungsstellenabgewandten Abschnitt (13, 13', 13") zugeordnete Bestandteil (17) des Gelenkelements (15) einstückig mit dem verbindungsstellenabgewandten Abschnitt (13, 13', 13") ausgebildet ist.

5. Abdeckvorrichtung (1) gemäß Anspruch 1 oder Anspruch 4, **dadurch gekennzeichnet, dass** zwischen dem dem verbindungsstellenseitigen Abschnitt (12, 12', 12") zugeordnete Bestandteil (16) des Gelenkelements (15) und dem verbindungsstellenabgewandten Abschnitt (13, 13', 13") mindestens ein Dichtelement (18, 18') angeordnet ist.

6. Abdeckvorrichtung (1) gemäß Anspruch 1, Anspruch 4 oder Anspruch 5, **dadurch gekennzeichnet, dass** der verbindungsstellenabgewandte Abschnitt (13, 13', 13") zumindest teilweise in den verbindungsstellenseitigen Abschnitt (12, 12', 12") aufnehmbar ist.

7. Abdeckvorrichtung (1) gemäß einem der Ansprüche 1 bis 6, **dadurch gekennzeichnet, dass** die Abdeckvorrichtung (1) eine im Wesentlichen T-förmige Gesamtgeometrie oder eine im Wesentlichen Y-förmige Gesamtgeometrie aufweist.

## Claims

1. A covering device (1) for covering a connection point (2) of two or more mediacarrying pipe end portions (4, 4', 4"), wherein the covering device (1) comprises a plurality of covering elements that are connectable to one another and are mountable around the connection point (2) to form a pipe sheathing that accommodates the connection point (2), wherein the covering device (1) comprises at least one pipe covering portion (11, 11', 11") assigned to a pipe end portion (4, 4', 4"), with an outer sealing element (20, 20', 20") disposed at the end of said pipe covering portion for sealing the covering device (1) with respect to the pipe end portion (4, 4', 4"), wherein the outer sealing element (20, 20', 20") comprises a termination region (21) and a passage region (22) for the passage of the pipe end portion (4, 4', 4"), wherein the outer sealing element (20, 20', 20") is made of an elastic material, and the passage region (22) of the outer sealing element (20, 20', 20") is adaptable to the outer diameter of the pipe end portion (4, 4', 4") to be guided through the outer sealing element (20, 20', 20"), wherein at least one of the pipe covering portions (11, 11', 11") is divided in the axial direction into portions (12, 12', 12", 13, 13', 13") and comprises at least one connection-point-side portion (12, 12', 12") and a connection-point-remote portion (13, 13', 13"), wherein the connection point-side portion (12, 12', 12") and the connection-point-remote portion (13, 13', 13") are connected to each other via a joint element (15), wherein the joint element (15) is formed in two parts, wherein one component (16) of the joint element (15) is assigned to the connection-point-side portion (12, 12', 12") of the pipe covering portion (11, 11', 11"), and a further component (17) of the joint element (15) is assigned to the connection-point-remote portion (13, 13', 13") of the pipe covering portion (11, 11', 11"),
**characterised in that**
the component (16) of the joint element (15) assigned to the connection-point-side portion (12, 12', 12") and the component (17) of the joint element (15) assigned to the connection-point-remote portion (13, 13', 13") are configured as ball shell portions that are rotatable relative to each other and the termination region (21) of the outer sealing element (20, 20', 20") is formed as a bellows at least in portions.

2. The covering device (1) according to claim 1, **characterised in that** the passage region (22) of the outer sealing element (20, 20', 20") is adaptable to the outer diameter of the pipe end portion (4, 4', 4") to be guided through the outer sealing element (20, 20', 20") by cutting the termination region (21) to length.

3. The covering device (1) according to claim 1 or claim 2, **characterised in that** the outer sealing element (20, 20', 20") is connected to the assigned pipe covering portion (11, 11', 11") via a connection element (23), which is preferably formed as a separate component.

4. The covering device (1) according to claim 1, **characterised in that** the component (16) of the joint element (15) assigned to the connection-point-side portion (12, 12', 12") is formed in one piece with the connection-point-side portion (12, 12', 12") and/or the component (17) of the joint element (15) assigned to the connection-point-remote portion (13, 13', 13") is formed in one piece with the connection-point-remote portion (13, 13', 13").

5. The covering device (1) according to claim 1 or claim 4, **characterised in that** at least one sealing element (18, 18') is disposed between the component (16) of the joint element (15) assigned to the connection-point-side portion (12, 12', 12") and the connection-point-remote portion (13, 13', 13").

6. The covering device (1) according to claim 1, claim 4 or claim 5, **characterised in that** the connection-point-remote portion (13, 13', 13") is at least partially accommodatable in the connection-point-side portion (12, 12', 12").

7. The covering device (1) according to any one of claims 1 to 6, **characterised in that** the covering device (1) has a substantially T-shaped overall geometry or a substantially Y-shaped overall geometry.

## Revendications

1. Dispositif de recouvrement (1) pour recouvrir un point de liaison (2) entre deux ou plus de deux sections d'extrémité de tuyau (4, 4', 4") transportant un fluide, le dispositif de recouvrement (1) comprenant une pluralité d'éléments de recouvrement pouvant être reliés entre eux, qui peuvent être montés autour du point de liaison (2) pour former une enveloppe de tuyau recevant le point de liaison (2), le dispositif de recouvrement (1) comprenant au moins une section de recouvrement de tuyau (11, 11', 11") associée à une section d'extrémité de tuyau (4, 4', 4"), à l'extrémité de laquelle est agencé un élément d'étanchéité extérieur (20, 20', 20") pour assurer l'étanchéité du dispositif de recouvrement (1) par rapport à la section d'extrémité de tuyau (4, 4', 4"), l'élément d'étanchéité extérieur (20, 20', 20") comprenant une zone de terminaison (21) et une zone de passage (22) pour le passage de la section d'extrémité de tuyau (4, 4', 4"), l'élément d'étanchéité extérieur (20, 20', 20") étant réalisé en un matériau élastique et la zone de passage (22) de l'élément d'étanchéité extérieur (20, 20', 20") pouvant être adaptée au diamètre extérieur de la section d'extrémité de tuyau (4, 4', 4") à guider à travers l'élément d'étanchéité extérieur (20, 20', 20"), au moins l'une des sections de recouvrement de tuyau (11, 11', 11") étant réalisée sous forme divisée dans la direction axiale en sections (12, 12', 12", 13, 13', 13") et comprenant au moins une section du côté du point de liaison (12, 12', 12") et une section détournée du point de liaison (13, 13', 13"), la section du côté du point de liaison (12, 12', 12") et la section détournée du point de liaison (13, 13', 13") étant reliées entre elles par l'intermédiaire d'un élément d'articulation (15), l'élément d'articulation (15) étant réalisé en deux parties, un constituant (16) de l'élément d'articulation (15) étant associé à la section du côté du point de liaison (12, 12', 12") de la section de recouvrement de tuyau (11, 11', 11") et un autre constituant (17) de l'élément d'articulation (15) étant associé à la section détournée du point de liaison (13, 13', 13") de la section de recouvrement de tuyau (11, 11', 11"),
**caractérisé en ce que**
le constituant (16) de l'élément d'articulation (15) associé à la section du côté du point de liaison (12, 12', 12") et le constituant (17) de l'élément d'articulation (15) associé à la section détournée du point de liaison (13, 13', 13") sont réalisés sous forme de sections de coque sphérique pouvant tourner l'une par rapport à l'autre et la zone de terminaison (21) de l'élément d'étanchéité extérieur (20, 20', 20") est réalisée au moins par sections sous forme de soufflet.

2. Dispositif de recouvrement (1) selon la revendication 1, **caractérisé en ce que** la zone de passage (22) de l'élément d'étanchéité extérieur (20, 20', 20") peut être adaptée au diamètre extérieur de la section d'extrémité de tuyau (4, 4', 4") à guider à travers l'élément d'étanchéité extérieur (20, 20', 20") par découpe en longueur de la zone de terminaison (21).

3. Dispositif de recouvrement (1) selon la revendication 1 ou la revendication 2, **caractérisé en ce que** l'élément d'étanchéité extérieur (20, 20', 20") est relié à la section de recouvrement de tuyau associée (11, 11', 11") par l'intermédiaire d'un élément de liaison (23) qui est de préférence réalisé sous forme de composant séparé.

4. Dispositif de recouvrement (1) selon la revendication 1, **caractérisé en ce que** le constituant (16) de l'élément d'articulation (15) associé à la section du côté du point de liaison (12, 12', 12") est réalisé d'un seul tenant avec la section du côté du point de liaison (12, 12', 12") et/ou le constituant (17) de l'élément d'articulation (15) associé à la section détournée du point de liaison (13, 13', 13") est réalisé d'un seul tenant avec la section détournée du point de liaison (13, 13', 13").

5. Dispositif de recouvrement (1) selon la revendication 1 ou la revendication 4, **caractérisé en ce qu'**au moins un élément d'étanchéité (18, 18') est agencé entre le constituant (16) de l'élément d'articulation (15) associé à la section du côté du point de liaison (12, 12', 12") et la section détournée du point de liaison (13, 13', 13").

6. Dispositif de recouvrement (1) selon la revendication 1, la revendication 4 ou la revendication 5, **caractérisé en ce que** la section détournée du point de liaison (13, 13', 13") peut être reçue au moins en partie dans la section du côté du point de liaison (12, 12', 12").

7. Dispositif de recouvrement (1) selon l'une quelconque des revendications 1 à 6, **caractérisé en ce que** le dispositif de recouvrement (1) présente une géométrie globale essentiellement en forme de T ou une géométrie globale essentiellement en forme de Y.
